(19) Europäisches Patentamt
European Patent Office
Office européen des brevets

(11) **EP 4 582 384 A1**

(12) **EUROPEAN PATENT APPLICATION**
published in accordance with Art. 153(4) EPC

(43) Date of publication:
**09.07.2025 Bulletin 2025/28**

(21) Application number: **22956691.4**

(22) Date of filing: **30.08.2022**

(51) International Patent Classification (IPC):
*C01D 7/07* [(2006.01)]  *C01D 7/14* [(2006.01)]
*B01D 53/14* [(2006.01)]  *B01D 53/62* [(2006.01)]

(52) Cooperative Patent Classification (CPC):
**B01D 53/14; B01D 53/62; C01D 7/07; C01D 7/14**

(86) International application number:
**PCT/JP2022/032631**

(87) International publication number:
**WO 2024/047761 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **JTEKT Corporation
Kariya-shi, Aichi 448-8652 (JP)**

(72) Inventors:
• **SAITO, Toshiyuki
Kariya-shi, Aichi 448-8652 (JP)**

• **NAKAI, Motoo
Kariya-shi, Aichi 448-8652 (JP)**
• **YOSHIDA, Kouya
Kariya-shi, Aichi 448-8652 (JP)**
• **SATO, Hisataka
Kariya-shi, Aichi 448-8652 (JP)**
• **NANRI, Kota
Kariya-shi, Aichi 448-8652 (JP)**
• **HIGASHIYAMA, Yoshimichi
Kariya-shi, Aichi 448-8652 (JP)**
• **MATSUYAMA, Junya
Kariya-shi, Aichi 448-8652 (JP)**

(74) Representative: **TBK
Bavariaring 4-6
80336 München (DE)**

(54) **CO2 RECOVERY SYSTEM**

(57) A $CO_2$ collection system (1) is configured to collect $CO_2$ by bringing $CO_2$-containing gas into contact with a reaction liquid containing NaOH and stored in a reaction tank (11) to produce a target product. The target product to be extracted from the reaction liquid is adjusted according to a maximum temperature of the reaction liquid after production of $NaHCO_3$ in the reaction liquid, an extraction temperature that is a temperature of the reaction liquid when the target product is extracted from the reaction tank (11), and an initial concentration of the NaOH in the reaction liquid.

FIG. 10

FIRST CONCENTRATION RANGE | THIRD CONCENTRATION RANGE

AQUEOUS $NaHCO_3$ SOLUTION

SOLID $NaHCO_3$

SOLID $Na_2CO_3$

FIFTH CONCENTRATION RANGE (LIQUID TEMPERATURE OF 65℃ OR MORE)

AQUEOUS SODIUM SESQUICARBONATE SOLUTION

SECOND CONCENTRATION RANGE

FOURTH CONCENTRATION RANGE (LIQUID TEMPERATURE OF 65℃ OR MORE)

AQUEOUS $Na_2CO_3$ SOLUTION / SOLID $Na_2CO_3$

0    A    B
INITIAL NaOH CONCENTRATION (%)

## Description

TECHNICAL FIELD

The present disclosure relates to a $CO_2$ collection system.

BACKGROUND ART

In recent years, there has been a demand to reduce emissions of $CO_2$ gas as greenhouse gas, and research has variously been conducted on methods for collecting $CO_2$ gas. As a method for collecting $CO_2$, for example, there is a method of chemically absorbing $CO_2$ in an amine solution. However, the amine solution that has absorbed $CO_2$ cannot be used as a resource, and therefore separation of $CO_2$ is required. The separation of $CO_2$ requires temperature increase, resulting in energy loss. There is also a method of collecting $CO_2$ by physically adsorbing it onto zeolite. However, this method requires pressurization and heating during adsorption, resulting in energy loss. Further, the zeolite that has adsorbed $CO_2$ cannot be used as a resource, and therefore separation of $CO_2$ is required.

Further, as a method for collecting $CO_2$, there is a method of collecting $CO_2$ by chemically absorbing it in an alkaline solution such as NaOH. For example, in a configuration disclosed in Patent Document 1, $CO_2$ produced during L-glutamic acid fermentation is exposed into an aqueous NaOH solution to produce $NaHCO_3$ or $Na_2CO_3$, thereby immobilizing and collecting $CO_2$. In a configuration disclosed in Patent Document 2, exhaust gas from a power plant, a chemical plant, etc. is brought into contact with an aqueous NaOH solution to produce $NaHCO_3$ or $Na_2CO_3$, thereby collecting $CO_2$ from the exhaust gas. All of these products are useful as resources, and collected $CO_2$ can effectively be reused without separating $CO_2$. Even when separating $CO_2$, it is sufficient to add citric acid to the aqueous product solution, and there is no need to increase the temperature. Therefore, energy loss is small.

Related Art Documents

Patent Documents

Patent Document 1: Japanese Unexamined Patent Application Publication No. 11-243985 (JP 11-243985 A)
Patent Document 2: Japanese Unexamined Patent Application Publication (Translation of PCT Application) No. 2009-535198 (JP 2009-535198 A)

SUMMARY OF THE INVENTION

Problem to be Solved by the Invention

In order to more effectively utilize the product $NaHCO_3$ or $Na_2CO_3$ as a resource, it is necessary to improve the purity. In the configurations disclosed in Patent Documents 1 and 2, however, the ratio of the products varies depending on a $CO_2$ concentration in $CO_2$-containing gas and a reaction period. Therefore, it is difficult to selectively produce the products, and the purity of the obtained products is likely to decrease. Therefore, there is room for improvement in selectively producing the products and increasing the purity of the products.

The present disclosure provides a $CO_2$ collection system capable of increasing the purity of a target product.

Means for Solving the Problem

One aspect of the present disclosure is a $CO_2$ collection system configured to collect $CO_2$ by bringing $CO_2$-containing gas into contact with a reaction liquid containing NaOH and stored in a reaction tank to produce a target product. The target product to be extracted from the reaction liquid is adjusted according to a maximum temperature of the reaction liquid after production of $NaHCO_3$ in the reaction liquid, an extraction temperature that is a temperature of the reaction liquid when the target product is extracted from the reaction tank, and an initial concentration of the NaOH in the reaction liquid.

Another aspect of the present disclosure is a $CO_2$ collection system configured to collect $CO_2$ by bringing $CO_2$-containing gas into contact with a reaction liquid containing NaOH and stored in a reaction tank to produce a predetermined target product. A maximum temperature of the reaction liquid after production of $NaHCO_3$ in the reaction liquid is determined according to the target product to be extracted from the reaction liquid. An initial concentration of the NaOH in the reaction liquid is determined based on the target product to be extracted from the reaction liquid and an extraction temperature that is a temperature of the reaction liquid when the target product is extracted from the reaction tank.

Effects of the Invention

In the $CO_2$ collection system of the one aspect, the target product to be extracted from the reaction liquid is adjusted by adjusting the maximum temperature of the reaction liquid after the production of the $NaHCO_3$ in the reaction liquid, the extraction temperature that is the temperature of the reaction liquid when the target product is extracted from the reaction tank, and the initial concentration of the NaOH in the reaction liquid. Thus, the product can selectively be produced easily, and the desired target product can easily be extracted with high purity.

In the $CO_2$ collection system of the other aspect, the maximum temperature of the reaction liquid after the production of the $NaHCO_3$ is determined according to the predetermined target product, and the initial concentration of the NaOH in the reaction liquid is determined based on the predetermined target product and the extraction temperature. Thus, it is possible to provide the $CO_2$ collection system suitable for obtaining the predetermined target product with high purity.

As described above, according to the above aspects, it is possible to provide the $CO_2$ collection system capable of increasing the purity of the target product.

The signs in parentheses in the claims indicate correspondence with specific means described in the embodiments below, and are not intended to limit the technical scope of the present disclosure.

BRIEF DESCRIPTION OF THE DRAWINGS

[FIG. 1] FIG. 1 is a conceptual diagram showing the configuration of a $CO_2$ collection system in a first embodiment.
[FIG. 2] FIG. 2 is a diagram showing a first-order approximation equation for a temperature (liquid temperature) and a NaOH concentration required to produce $NaHCO_3$ with saturated solubility.
[FIG. 3] FIG. 3 is a conceptual diagram showing the correspondence between an initial NaOH concentration and a target product in the first embodiment.
[FIG. 4] FIG. 4 is a diagram showing a first-order approximation equation for a temperature (liquid temperature) and a NaOH concentration required to produce $Na_2CO_3$ with saturated solubility.
[FIG. 5] FIG. 5 is a conceptual diagram showing the correspondence between an initial NaOH concentration and a target product in a second embodiment.
[FIG. 6] FIG. 6 is a conceptual diagram showing the correspondence between an initial NaOH concentration and a target product in a third embodiment.
[FIG. 7] FIG. 7 is a conceptual diagram showing the correspondence between an initial NaOH concentration and a target product in a fourth embodiment.
[FIG. 8] FIG. 8 is a conceptual diagram showing the correspondence between an initial NaOH concentration and a target product in a fifth embodiment.
[FIG. 9] FIG. 9 is a conceptual diagram showing the configuration of a $CO_2$ collection system in a sixth embodiment.
[FIG. 10] FIG. 10 is a conceptual diagram showing the correspondence between an initial NaOH concentration and a target product.

MODES FOR CARRYING OUT THE INVENTION

(First Embodiment)

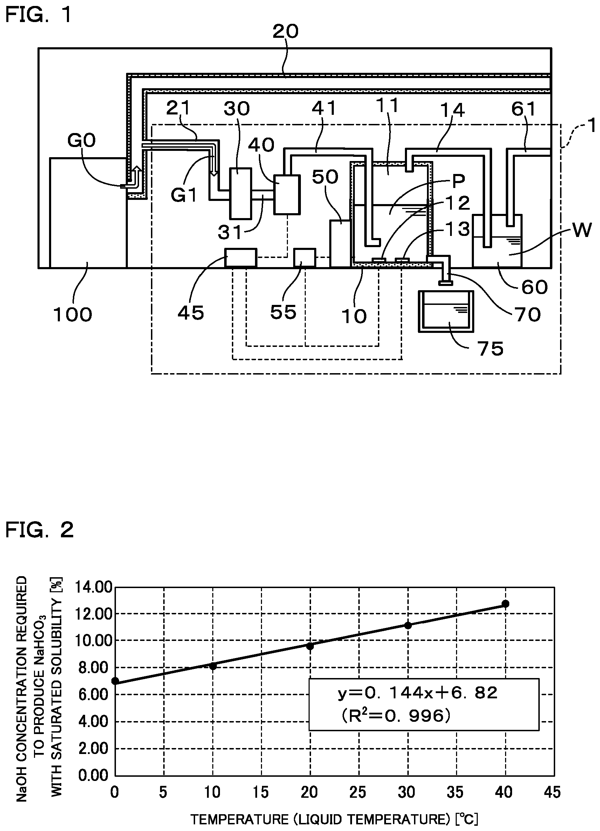

A first embodiment of a $CO_2$ collection system will be described with reference to FIGS. 1 to 3.

1-1. Target Product

In a $CO_2$ collection system 1, a target product to be produced by bringing $CO_2$-containing gas into contact with a reaction liquid containing NaOH can be an aqueous solution or a solid of $NaHCO_3$, an aqueous solution or a solid of $Na_2CO_3$, or an aqueous solution or a solid of sodium sesquicarbonate that is a mixture of $NaHCO_3$ and $Na_2CO_3$. In the first embodiment, the target product is an aqueous $NaHCO_3$ solution.

1-2. $CO_2$-containing Gas

As shown in FIG. 1, the $CO_2$ collection system 1 of the present embodiment is configured to collect $CO_2$ from

exhaust gas that is $CO_2$-containing gas emitted from a $CO_2$ emission facility 100. In this specification, the "$CO_2$-containing gas" refers to a gas containing $CO_2$ as a component. The $CO_2$-containing gas may be a gas containing only $CO_2$ as a component, or may be a gas further containing unavoidable impurities. The $CO_2$-containing gas may be a mixed gas in which $CO_2$ and other substances are mixed as components. The proportion of $CO_2$ in the mixed gas is not limited, and the main component having the largest proportion in the mixed gas may be $CO_2$ or a substance other than $CO_2$.

### 1-3. $CO_2$ Emission Facility 100

The $CO_2$ emission facility 100 shown in FIG. 1 is not particularly limited as long as it is a facility that emits $CO_2$-containing gas, and examples of the facility include a facility having a boiler, a fuel cell, an incinerator, and a heat treatment facility. An exhaust duct 20 is connected to the $CO_2$ emission facility 100, and exhaust gas G0 that is $CO_2$-containing gas is emitted via the exhaust duct 20. The temperature of the exhaust gas G0 emitted from the $CO_2$ emission facility 100 is not particularly limited, and is preferably high. For example, the temperature can be within a range of 100°C to 300°C. In the present embodiment, the exhaust gas G0 emitted from the $CO_2$ emission facility 100 has a temperature of 140°C.

### 1-4. $CO_2$ Collection System 1

The $CO_2$ collection system 1 of the present embodiment mainly includes a $CO_2$ collection device 10, a gas channel 21, a moisture removal filter 30, an air pump 40, a liquid temperature adjustment device 50, and a filter 60. Each component will be described below.

### 1-5. Gas Channel 21

The gas channel 21 allows $CO_2$-containing gas to flow. In the first embodiment, the gas channel 21 is formed by a pipe connected to the exhaust duct 20 that is connected to the $CO_2$ emission facility 100. Part of the exhaust gas G0 that is $CO_2$-containing gas flowing through the exhaust duct 20 flows through the gas channel 21.

In the first embodiment, taking into consideration that, if the amount of $CO_2$-containing gas bubbling in a reaction tank 11 described later is excessively large, it is difficult to obtain fine bubbles in a reaction liquid, only part of the exhaust gas G0 emitted from the $CO_2$ emission facility 100 is caused to flow through the gas channel 21, and the remaining exhaust gas that is not caused to flow through the gas channel 21 is released to the outside via the exhaust duct 20.

### 1-6. Moisture Removal Filter 30

The moisture removal filter 30 is provided in the gas channel 21, and removes moisture from $CO_2$-containing gas flowing through the gas channel 21. Although illustration is omitted, the moisture removal filter 30 is composed of a water separator including a moisture separation portion that separates water vapor contained in $CO_2$-containing gas as a liquid, and a gas passage portion through which the $CO_2$-containing gas from which the water vapor has been separated and removed passes. The separated moisture is stored in a tank that is not shown and discharged as appropriate. The exhaust gas that has passed through the gas passage portion is discharged into a pipe 31 that communicates with the air pump 40 described later. By removing water using the moisture removal filter 30, water is prevented from accumulating in the downstream air pump 40.

### 1-7. Air Pump 40

The air pump 40 is connected to the moisture removal filter 30 via the pipe 31, and is configured to suck $CO_2$-containing gas. The suction of the air pump 40 causes part of the exhaust gas to flow from the exhaust duct 20 to the gas channel 21. The sucked $CO_2$-containing gas is supplied to the reaction tank 11 described later via a pipe 41. The configuration of the air pump 40 is not limited, and the air pump 40 is preferably a diaphragm pump in which gas does not come into direct contact with a drive unit of the air pump 40.

The drive of the air pump 40 is controlled by a pump control unit 45. The pump control unit 45 switches the suction operation of the air pump 40 ON and OFF based on a detection result from a pH sensor 13 that detects the pH of the reaction liquid in the reaction tank 11 described later. When the suction operation of the air pump 40 is turned ON, bubbling of the $CO_2$-containing gas in the reaction tank 11 described later is started. When the suction operation of the air pump 40 is turned OFF, the bubbling is stopped.

Regarding the flow rate of the $CO_2$-containing gas sucked by the air pump 40, the operation of the air pump 40 can be controlled by the pump control unit 45 based on a detection result from a temperature sensor 12 that detects the temperature (liquid temperature) of a reaction liquid P in the reaction tank 11 described later. Therefore, the amount of the $CO_2$-containing gas supplied to the reaction tank 11 described later can be adjusted to control reaction heat produced in the reaction tank 11. Thus, the temperature of the reaction liquid P can be set to a predetermined temperature. In the first embodiment, the temperature of the reaction liquid P is adjusted by the liquid temperature adjustment device 50 described later, in addition to the control on the flow rate in the air pump 40. In order to minimize energy required to adjust the temperature of the reaction liquid P, the length of the pipe forming the gas channel 21 and the heat dissipation properties of the pipe can be adjusted in advance according to the target temperature of the reaction liquid P.

1-8. $CO_2$ Collection Device 10

The $CO_2$ collection device 10 collects $CO_2$ from $CO_2$-containing gas by bringing the $CO_2$-containing gas into contact with the reaction liquid stored in the reaction tank 11. The reaction liquid is an aqueous NaOH solution containing NaOH. The NaOH concentration in the reaction liquid will be described later.

The $CO_2$-containing gas is supplied to the reaction tank 11 via the pipe 41. The tip of the pipe 41 is located near the inner bottom of the reaction tank 11, and is configured to discharge the $CO_2$-containing gas into the reaction liquid to cause bubbling. The reaction tank 11 is provided with the temperature sensor 12 that detects the temperature (liquid temperature) of the reaction liquid P, and the pH sensor 13 that detects the pH of the reaction liquid P.

The reaction tank 11 is provided with the liquid temperature adjustment device 50 capable of heating or cooling the reaction liquid in the reaction tank 11. A liquid temperature adjustment device control unit 55 that controls the operation of the liquid temperature adjustment device 50 is connected to the liquid temperature adjustment device 50. The liquid temperature adjustment device control unit 55 is configured to control the heating or cooling operation of the liquid temperature adjustment device 50 based on the liquid temperature that is the temperature of the reaction liquid P detected by the temperature sensor 12 provided in the reaction tank 11. Based on the liquid temperature detected by the temperature sensor 12, the pump control 45 controls the operation of the air pump 40 and the liquid temperature adjustment device control unit 55 controls the operation of the liquid temperature adjustment device 50 as described above. Thus, the temperature of the reaction liquid or an aqueous product solution in the reaction tank 11 can be maintained at a predetermined temperature.

1-9. $CO_2$ Immobilization Reaction

By bringing $CO_2$-containing gas into contact with a reaction liquid containing NaOH (aqueous NaOH solution) in the reaction tank 11, a reaction of formula 1 below occurs and then a reaction of formula 2 below occurs in the reaction tank 11. In this specification, formulas 1 and 2 below are referred to also as $CO_2$ immobilization reaction.

$$2NaOH + CO_2 \rightarrow Na_2CO_3 + H_2O \qquad \text{(Formula 1)}$$

$$Na_2CO_3 + CO_2 + H_2O \rightarrow 2NaHCO_3 \qquad \text{(Formula 2)}$$

In the reaction tank 11 shown in FIG. 1, neither $NaHCO_3$ nor $Na_2CO_3$ is present before the start of the reactions. Along with the progress of the reactions, however, one of the following states will occur: a state in which $Na_2CO_3$ is produced and $NaHCO_3$ is not present, a state in which part of $Na_2CO_3$ further reacts with $CO_2$ to produce $NaHCO_3$ and both are present, or a state in which all $Na_2CO_3$ is converted to $NaHCO_3$ and disappears and $NaHCO_3$ is present. Both $NaHCO_3$ and $Na_2CO_3$ produced by the above reactions are dissolved in the water in the reaction tank 11 and are in the form of aqueous solutions. In this specification, $NaHCO_3$, $Na_2CO_3$, and a mixture of the two are collectively referred to as "product," and these aqueous solutions are collectively referred to as "aqueous product solution." In the products, a product to be obtained with high purity is referred to as "target product."

In the first embodiment, the $CO_2$-containing gas supplied from the pipe 41 is brought into contact with the aqueous NaOH solution in the reaction tank 11 by bubbling. Therefore, the reactions can be started. In order to increase the frequency of contact between the $CO_2$-containing gas and the aqueous NaOH solution, the $CO_2$-containing gas is preferably discharged in the form of fine bubbles during bubbling. The fine bubbles can be formed by a fine bubble forming device (not shown) provided at the tip of the pipe 41.

If the exhaust gas emitted from the $CO_2$ emission facility 100 contains a substance that inhibits the above reactions in the reaction tank 11, a filter (not shown) that removes the substance that inhibits the above reactions is preferably provided at a position upstream of the reaction tank 11, for example, on the gas channel 21, between the moisture removal filter 30 and the air pump 40, or between the air pump 40 and the reaction tank 11. If the exhaust gas emitted from the $CO_2$ emission facility 100 does not contain any components other than $CO_2$, or if it is clear that the exhaust gas does not contain any substance that inhibits the above reactions in the reaction tank 11, there is no need to provide the filter.

An exhaust unit 14 shown in FIG. 1 discharges, from the reaction tank 11 to the filter 60, $CO_2$-removed gas from which $CO_2$ has been removed in the reaction tank 11. The filter 60 captures harmful components in the $CO_2$-removed gas.

The configuration of the filter 60 is not limited. In the first embodiment, the filter 60 is configured to remove watersoluble substances (e.g., NaOH in the reaction liquid that is sprayed by bubbling in the reaction tank 11 and reaches the exhaust unit 14, and nitrogen oxides $NO_x$ contained in the exhaust gas) in the $CO_2$-removed gas by bubbling the $CO_2$-removed gas in water W stored in the filter 60 and passing it through the water W. The $CO_2$-removed gas that has passed through the filter 60 is released to the outside of the $CO_2$ collection system 1 via an external release unit 61.

The target product can be collected as follows. When the target product produced by the reactions of formulas 1 and 2 above is in the form of an aqueous solution, the aqueous solution of the target product is discharged to the outside via an openable and closable drain cock 70 provided in the reaction tank 11 and collected in a collection container 75. When the target product is in the form of a solid, the solid target product is discharged to the outside together with the aqueous solution in the reaction tank 11 via the drain cock 70 provided in the reaction tank 11 and collected in the collection container 75, and then the solid target product is separated and collected by filtration, centrifugation, etc. The collected target product can be used as a resource, for example, as a cleaning agent, an antiseptic, or a herbicide.

After the target product is collected from the reaction tank 11, the drain cock 70 is closed, and an aqueous NaOH solution that is the reaction liquid to be used in the next reaction is supplied into the reaction tank 11 from a reaction liquid supply unit that is not shown. The drain cock 70 is closed in a normal state in which the target product is not collected.

1-10. Initial NaOH Concentration, Maximum Temperature of Reaction Liquid, and Extraction Temperature

The concentration of NaOH in the reaction liquid stored in the reaction tank 11 before the start of the above $CO_2$ immobilization reaction is referred to as "initial NaOH concentration." In the first embodiment, the initial NaOH concentration is determined based on a target product to be extracted from the reaction liquid, a maximum temperature of the reaction liquid after $NaHCO_3$ is produced in the reaction liquid, and an extraction temperature that is a liquid temperature when the target product is extracted from the reaction tank 11.

In the first embodiment, the target product to be extracted from the reaction liquid is an aqueous solution of $NaHCO_3$ (sodium bicarbonate) as described above. The initial concentration of NaOH is set to a value more than 0% and equal to or less than a NaOH concentration required to produce $NaHCO_3$ with saturated solubility at the extraction temperature that is derived based on the correspondence between the temperature of the reaction liquid and the NaOH concentration required to produce $NaHCO_3$ with saturated solubility.

Regarding the correspondence between the temperature of the reaction liquid and the NaOH concentration required to produce $NaHCO_3$ with saturated solubility, the saturated solubility of $NaHCO_3$ at 10°C intervals from 0°C to 40°C is first shown in an upper part of Table 1 below. The NaOH concentration required to produce $NaHCO_3$ with saturated solubility at each temperature is calculated as shown in a lower part of Table 1 below.

[Table 1]

(Table 1)

| Temperature (°C) | 0 | 10 | 20 | 30 | 40 |
|---|---|---|---|---|---|
| Saturated solubility of $NaHCO_3$ (%) | 7.00 | 8.10 | 9.60 | 11.10 | 12.70 |
| NaOH concentration required to produce $NaHCO_3$ with saturated solubility (%) | 3.33 | 3.86 | 4.57 | 5.29 | 5.38 |

A first-order approximation equation for the temperature (liquid temperature) and the NaOH concentration required to produce $NaHCO_3$ with saturated solubility shown in the lower part of Table 1 can be calculated as shown in formula 3 below, and can be shown as in FIG. 2.

$$y = 0.144x + 6.82 \ (R^2 = 0.996) \ (\text{Formula 3})$$

(where y is the NaOH concentration required to produce $NaHCO_3$ with saturated solubility, and x is the liquid temperature)

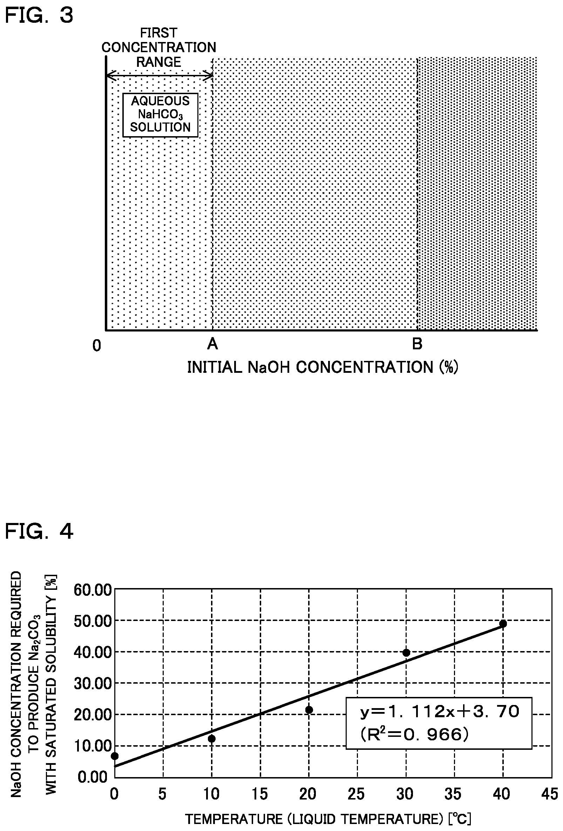

In the first embodiment, the approximation equation shown in formula 3 above is used as the correspondence between the temperature of the reaction liquid and the NaOH concentration required to produce $NaHCO_3$ with saturated solubility. The initial NaOH concentration is set within a first concentration range shown in FIG. 3 that is a range more than 0% and equal to or less than a NaOH concentration A required to produce $NaHCO_3$ with saturated solubility at the extraction temperature that is calculated based on the approximation equation of formula 3 above. The format of the correspondence between the temperature of the reaction liquid and the NaOH concentration required to produce $NaHCO_3$ with saturated solubility is not limited, and may be a higher-order approximation equation instead of the first-order approximation equation in the first embodiment, or may be determined by a map or a logical formula.

The maximum temperature of the reaction liquid after the production of $NaHCO_3$ in the reaction liquid is set to less than 65°C. Since the above $CO_2$ immobilization reaction is an exothermic reaction, the temperature of the reaction liquid increases during $CO_2$ immobilization. However, the temperature (liquid temperature) of the reaction liquid is adjusted to less than 65°C by the above air pump 40 and the above liquid temperature adjustment device 50.

The extraction temperature that is the liquid temperature when the target product is extracted from the reaction tank 11 can be set within a range of general outside air temperature. In the first embodiment, the extraction temperature is set to 0°C or more and 40°C or less.

The upper limit A of the first concentration range shown in FIG. 3 can be set to 3.86 to 4.57% when the extraction temperature is 10°C or more and less than 20°C based on the values in the lower part of Table 1 above, and can preferably be set to 3.86%. The upper limit A of the first concentration range can be set to 4.57 to 5.29% when the extraction temperature is 20°C or more and less than 30°C, and can preferably be set to 4.57%. The upper limit A of the first concentration range can be set to 5.29 to 5.38% when the extraction temperature is 30°C or more and less than 40°C, and can preferably be set to 5.29%. In FIG. 3, the symbol B indicates a NaOH concentration required to produce $Na_2CO_3$ with saturated solubility at the extraction temperature that is calculated based on an approximation equation of formula 4 described later.

1-11. Start and Stop of Reaction

In the $CO_2$ collection system 1 of the first embodiment, the suction operation of the air pump 40 is turned ON to start bubbling $CO_2$-containing gas in the reaction tank 11, thereby bringing the $CO_2$-containing gas into contact with the reaction liquid having the initial NaOH concentration. In this way, the $CO_2$ immobilization reaction is started. When the pH sensor 13 then detects that the pH of the reaction liquid in the reaction tank 11 has reached a value corresponding to the pH at which the total amount of NaOH has been converted to $NaHCO_3$, the suction operation of the air pump 40 is turned OFF to stop bubbling the $CO_2$-containing gas, thereby stopping the $CO_2$ immobilization reaction. Then, the target product is extracted from the reaction tank 11 via the drain cock 70 and collected in the collection container 75.

1-12. Actions and Effects

In the $CO_2$ collection system 1 of the first embodiment, the maximum temperature of the reaction liquid after the production of $NaHCO_3$ in the reaction liquid is set to less than 65°C, and the initial NaOH concentration is within the above first concentration range. Therefore, $NaHCO_3$ produced in the reaction tank 11 is not thermally decomposed and is not supersaturated. Thus, $NaHCO_3$ does not precipitate. As a result, a highly pure aqueous $NaHCO_3$ solution can be obtained as the target product, and the target product can selectively be produced easily. Since $NaHCO_3$ does not precipitate, clogging of the fine bubble forming device that is not shown and is provided at the tip of the pipe 41 can be prevented.

In the first embodiment, the initial NaOH concentration is determined based on the approximation equation of formula 3 above. Instead of this, modification 1-1, 1-2, or 1-3 below can be adopted.

In modification 1-1, the approximation equation of formula 3 above is not used. Based on the values of the NaOH concentration required to produce $NaHCO_3$ with saturated solubility shown in the lower part of Table 1 above, the extraction temperature is set to 10°C or more and less than 20°C, the initial concentration of NaOH is set within the first concentration range shown in FIG. 3 and is more than 0%, and the upper limit A can be set to 3.86 to 4.57%. The initial concentration of NaOH is preferably more than 0% and 3.86% or less.

In modification 1-2, the approximation equation of formula 3 above is not used. Based on the values of the NaOH concentration required to produce $NaHCO_3$ with saturated solubility shown in the lower part of Table 1 above, the extraction temperature is set to 20°C or more and less than 30°C, the initial concentration of NaOH is set within the first concentration range shown in FIG. 3 and is more than 0%, and the upper limit A can be set to 4.57 to 5.29%. The initial concentration of NaOH is preferably more than 0% and 4.57% or less.

In modification 1-3, the approximation equation of formula 3 above is not used. Based on the values of the NaOH concentration required to produce $NaHCO_3$ with saturated solubility shown in the lower part of Table 1 above, the extraction temperature is set to 30°C or more and less than 40°C, the initial concentration of NaOH is set within the first concentration range shown in FIG. 3 and is more than 0%, and the upper limit A can be set to 5.29 to 5.38%. The initial concentration of NaOH is preferably more than 0% and 5.29% or less.

In any of modifications 1-1, 1-2, and 1-3 above, the precipitation of $NaHCO_3$ is suppressed at the extraction temperature. Therefore, the same actions and effects as those of the first embodiment are attained.

(Second Embodiment)

In the second embodiment, the configurations of the devices are similar to those in the first embodiment shown in FIG. 1.

2-1. Target Product

In the first embodiment, the target product is the aqueous $NaHCO_3$ solution. In the second embodiment, the target product is an aqueous sodium sesquicarbonate solution in which $NaHCO_3$ and $Na_2CO_3$ are dissolved in water.

2-2. Initial NaOH Concentration, Maximum Temperature of Reaction Liquid, and Extraction Temperature

In the second embodiment, the initial concentration of NaOH is set to a value more than 0% and equal to or less than a NaOH concentration required to produce $Na_2CO_3$ with saturated solubility at the extraction temperature that is derived based on the correspondence between the temperature of the reaction liquid and the NaOH concentration required to produce $Na_2CO_3$ with saturated solubility.
Regarding the correspondence between the temperature of the reaction liquid and the NaOH concentration required to produce $Na_2CO_3$ with saturated solubility, the saturated solubility of $Na_2CO_3$ at 10°C intervals from 0°C to 40°C is first shown in an upper part of Table 2 below. The NaOH concentration required to produce $Na_2CO_3$ with saturated solubility at each temperature is calculated as shown in a lower part of Table 2 below.

[Table 2]

(Table 2)

| Temperature (°C) | 0 | 10 | 20 | 30 | 40 |
|---|---|---|---|---|---|
| Saturated solubility of $Na_2CO_3$ (%) | 7.00 | 12.50 | 21.50 | 39.70 | 49.00 |
| NaOH concentration required to produce $Na_2CO_3$ with saturated solubility (%) | 5.28 | 9.43 | 16.22 | 29.96 | 36.98 |

A first-order approximation equation for the temperature (liquid temperature) and the NaOH concentration required to produce $NaHCO_3$ with saturated solubility shown in the lower part of Table 2 can be calculated as shown in formula 4 below, and can be shown as in FIG. 4.

$$y = 1.112x + 3.70 \ (R^2 = 0.966) \ \text{(Formula 4)}$$

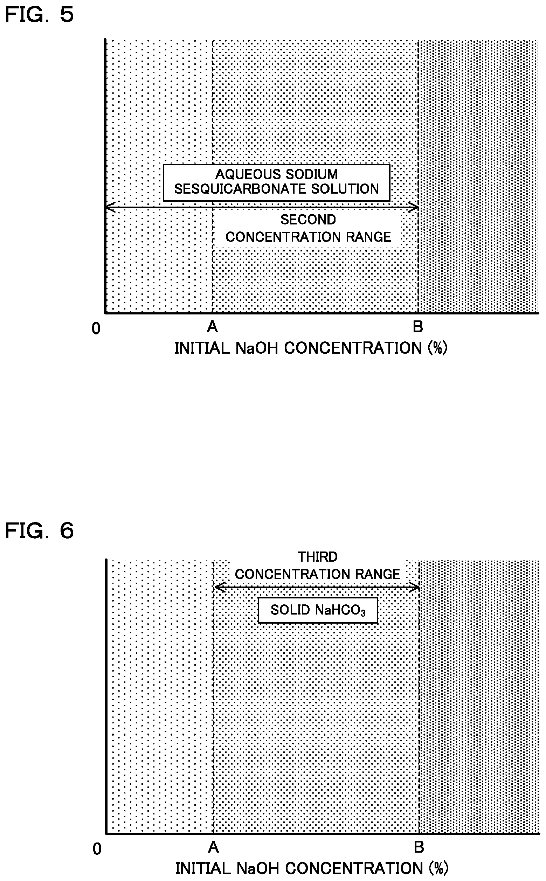

(where y is the NaOH concentration required to produce $Na_2CO_3$ with saturated solubility, and x is the liquid temperature)
In the second embodiment, the approximation equation shown in formula 4 above is used as the correspondence between the temperature of the reaction liquid and the NaOH concentration required to produce $Na_2CO_3$ with saturated solubility. The initial NaOH concentration is set within a second concentration range shown in FIG. 5 that is a range more than 0% and equal to or less than a NaOH concentration B required to produce $Na_2CO_3$ with saturated solubility at the extraction temperature that is calculated based on the approximation equation of formula 4 above. The format of the correspondence between the temperature of the reaction liquid and the NaOH concentration required to produce $Na_2CO_3$ with saturated solubility is not limited, and may be a higher-order approximation equation instead of the first-order approximation equation in the first embodiment, or may be determined by a map or a logical formula.
The maximum temperature of the reaction liquid after the production of $NaHCO_3$ in the reaction liquid is set to less than 65°C as in the first embodiment. The extraction temperature that is the liquid temperature when the target product is extracted from the reaction tank 11 is also set to 0°C or more and 40°C or less as in the first embodiment. The other configurations are similar to those in the first embodiment.
The upper limit B of the second concentration range shown in FIG. 5 can be set to 9.43 to 16.22% when the extraction temperature is 10°C or more and less than 20°C based on the values in the lower part of Table 2 above, and can preferably be set to 9.43%. The upper limit B of the second concentration range can be set to 16.22 to 29.96% when the extraction temperature is 20°C or more and less than 30°C, and can preferably be set to 16.22%. The upper limit B of the second concentration range can be set to 29.96 to 36.98% when the extraction temperature is 30°C or more and less than 40°C, and can preferably be set to 29.96%. In FIG. 5, the symbol A indicates the NaOH concentration required to produce $NaHCO_3$ with saturated solubility at the extraction temperature that is calculated based on the approximation equation of formula 3 described above.

8

2-3. Start and Stop of Reaction

In the $CO_2$ collection system 1 of the second embodiment, the suction operation of the air pump 40 is turned ON to start bubbling $CO_2$-containing gas in the reaction tank 11, thereby bringing the $CO_2$-containing gas into contact with the reaction liquid having the initial NaOH concentration. In this way, the $CO_2$ immobilization reaction is started. When the pH sensor 13 then detects that the pH of the reaction liquid in the reaction tank 11 has reached a value corresponding to the pH at which the total amount of NaOH has been consumed and the ratio of $Na_2CO_3$ to $NaHCO_3$ is 50:50 as desired, the suction operation of the air pump 40 is turned OFF to stop bubbling the $CO_2$-containing gas, thereby stopping the $CO_2$ immobilization reaction.

2-4. Actions and Effects

In the $CO_2$ collection system 1 of the second embodiment, the maximum temperature of the reaction liquid after the production of $NaHCO_3$ in the reaction liquid is set to less than 65°C. Therefore, $NaHCO_3$ produced in the reaction tank 11 is not thermally decomposed. Since the initial NaOH concentration is within the above second concentration range, $Na_2CO_3$ is not supersaturated and does not precipitate. As a result, a highly pure aqueous sodium sesquicarbonate solution in which $NaHCO_3$ and $Na_2CO_3$ are dissolved in water can be obtained as the target product, and the target product can selectively be produced easily. Since $Na_2CO_3$ does not precipitate, the reactivity of the reaction between $Na_2CO_3$ and $CO_2$ for producing $NaHCO_3$ shown in formula 2 above is prevented from decreasing, and the $CO_2$ collection rate is improved.

In the second embodiment, the initial NaOH concentration is determined based on the approximation equation of formula 4 above. Instead of this, modification 2-1, 2-2, or 2-3 below can be adopted.

In modification 2-1, the approximation equation of formula 4 above is not used. Based on the values of the NaOH concentration required to produce $Na_2CO_3$ with saturated solubility shown in the lower part of Table 2 above, the extraction temperature is set to 10°C or more and less than 20°C, the initial concentration of NaOH is set within the second concentration range shown in FIG. 5 and is more than 0%, and the upper limit B can be set to 9.43 to 16.22%. The initial concentration of NaOH is preferably more than 0% and 9.43% or less.

In modification 2-2, the approximation equation of formula 4 above is not used. Based on the values of the NaOH concentration required to produce $Na_2CO_3$ with saturated solubility shown in the lower part of Table 2 above, the extraction temperature is set to 20°C or more and less than 30°C, the initial concentration of NaOH is set within the second concentration range shown in FIG. 5 and is more than 0%, and the upper limit B can be set to 16.22 to 29.96%. The initial concentration of NaOH is preferably more than 0% and 16.22% or less.

In modification 2-3, the approximation equation of formula 4 above is not used. Based on the values of the NaOH concentration required to produce $Na_2CO_3$ with saturated solubility shown in the lower part of Table 2 above, the extraction temperature is set to 30°C or more and less than 40°C, the initial concentration of NaOH is set within the second concentration range shown in FIG. 5 and is more than 0%, and the upper limit B can be set to 29.96 to 36.98%. The initial concentration of NaOH is preferably more than 0% and 29.96% or less.

In any of modifications 2-1, 2-2, and 2-3 above, the precipitation of $Na_2CO_3$ can be suppressed at the extraction temperature. Therefore, the same actions and effects as those of the second embodiment are attained.

(Third Embodiment)

In the third embodiment, the configurations of the devices are similar to those in the first embodiment shown in FIG. 1.

3-1. Target Product

In the third embodiment, the target product is solid $NaHCO_3$.

3-2. Initial NaOH Concentration, Maximum Temperature of Reaction Liquid, and Extraction Temperature

In the third embodiment, the initial concentration of NaOH is set to be equal to or more than the NaOH concentration required to produce $NaHCO_3$ with saturated solubility at the extraction temperature that is derived based on the correspondence between the temperature of the reaction liquid and the NaOH concentration required to produce $NaHCO_3$ with saturated solubility, and to be equal to or less than the NaOH concentration required to produce $Na_2CO_3$ with saturated solubility at the extraction temperature that is derived based on the correspondence between the temperature of the reaction liquid and the NaOH concentration required to produce $Na_2CO_3$ with saturated solubility.

In the third embodiment, the "NaOH concentration required to produce $NaHCO_3$ with saturated solubility at the extraction temperature that is derived based on the correspondence between the temperature of the reaction liquid and the NaOH concentration required to produce $NaHCO_3$ with saturated solubility" is the NaOH concentration A calculated based on the approximation equation of formula 3 above in the first embodiment.

In the third embodiment, the "NaOH concentration required to produce $Na_2CO_3$ with saturated solubility at the extraction temperature that is derived based on the correspondence between the temperature of the reaction liquid and the NaOH concentration required to produce $Na_2CO_3$ with saturated solubility" is the NaOH concentration B calculated based on the approximation equation of formula 4 above in the second embodiment.

Therefore, in the third embodiment, the initial NaOH concentration is set to a third concentration range shown in FIG. 6 that is a range equal to or more than the NaOH concentration A required to produce $NaHCO_3$ with saturated solubility at the extraction temperature that is calculated based on the approximation equation of formula 3 above and equal to or less than the NaOH concentration B required to produce $Na_2CO_3$ with saturated solubility at the extraction temperature that is calculated based on the approximation equation of formula 4 above.

In the third embodiment, the maximum temperature of the reaction liquid after the production of $NaHCO_3$ in the reaction liquid is set to less than 65°C as in the first embodiment. The extraction temperature that is the liquid temperature when the target product is extracted from the reaction tank 11 is also set to 0°C or more and 40°C or less as in the first embodiment. The other configurations are similar to those in the first embodiment.

The lower limit A of the third concentration range shown in FIG. 6 can be set to 3.86 to 4.57% when the extraction temperature is 10°C or more and less than 20°C based on the values in the lower part of Table 1 above, and can preferably be set to 3.86%. The upper limit B can be set to 9.43 to 16.22% based on the values in the lower part of Table 2 above, and can preferably be set to 9.43%.

The lower limit A of the third concentration range can be set to 4.57 to 5.29% when the extraction temperature is 20°C or more and less than 30°C based on the values in the lower part of Table 1 above, and can preferably be set to 4.57%. The upper limit B can be set to 16.22 to 29.96% based on the values in the lower part of Table 2 above, and can preferably be set to 16.22%.

The lower limit A of the third concentration range can be set to 5.29 to 5.38% when the extraction temperature is 30°C or more and less than 40°C based on the values in the lower part of Table 1 above, and can preferably be set to 5.29%. The upper limit B can be set to 29.96 to 36.98% based on the values in the lower part of Table 2 above, and can preferably be set to 29.96%.

3-3. Start and Stop of Reaction

In the $CO_2$ collection system 1 of the third embodiment, the suction operation of the air pump 40 is turned ON to start bubbling $CO_2$-containing gas in the reaction tank 11, thereby bringing the $CO_2$-containing gas into contact with the reaction liquid having the initial NaOH concentration. In this way, the $CO_2$ immobilization reaction is started. When the pH sensor 13 then detects that the pH of the reaction liquid in the reaction tank 11 has reached a value corresponding to the pH at which the total amount of NaOH has been consumed and the ratio of $Na_2CO_3$ to $NaHCO_3$ is 50:50, the suction operation of the air pump 40 is turned OFF to stop bubbling the $CO_2$-containing gas, thereby stopping the $CO_2$ immobilization reaction.

3-4. Actions and Effects

In the $CO_2$ collection system 1 of the third embodiment, the maximum temperature of the reaction liquid after the production of $NaHCO_3$ in the reaction liquid is set to less than 65°C. Therefore, $NaHCO_3$ produced in the reaction tank 11 is not thermally decomposed. Since the initial NaOH concentration is within the above third concentration range, $Na_2CO_3$ is not supersaturated and does not precipitate, but $NaHCO_3$ is supersaturated and precipitates in the reaction tank 11. As a result, the only product that precipitates and becomes a solid in the reaction tank 11 is $NaHCO_3$. Therefore, highly pure solid $NaHCO_3$ can be obtained as the target product, and the target product can selectively be produced easily. Since $Na_2CO_3$ does not precipitate, the reactivity of the reaction between $Na_2CO_3$ and $CO_2$ for producing $NaHCO_3$ shown in formula 2 above is prevented from decreasing, and the $CO_2$ collection rate is improved.

In the third embodiment, the initial NaOH concentration is determined based on the approximation equations of formulas 3 and 4 above. Instead of this, modification 3-1, 3-2, or 3-3 below can be adopted.

In modification 3-1, the approximation equations of formulas 3 and 4 above are not used. Based on the values of the NaOH concentration A required to produce $NaHCO_3$ with saturated solubility shown in the lower part of Table 1 above and the values of the NaOH concentration B required to produce $Na_2CO_3$ with saturated solubility shown in the lower part of Table 2 above, the extraction temperature is set to 10°C or more and less than 20°C, the initial concentration of NaOH is set within the third concentration range shown in FIG. 6, the lower limit A can be set to 3.86 to 4.57%, and the upper limit B can be set to 9.43 to 16.22%. The initial concentration of NaOH can be set to 3.86% or more and 9.43% or less.

In modification 3-2, the approximation equations of formulas 3 and 4 above are not used. Based on the values of the NaOH concentration A required to produce $NaHCO_3$ with saturated solubility shown in the lower part of Table 1 above and the values of the NaOH concentration B required to produce $Na_2CO_3$ with saturated solubility shown in the lower part of Table 2 above, the extraction temperature is set to 20°C or more and less than 30°C, the initial concentration of NaOH is set within the third concentration range shown in FIG. 6, the lower limit A can be set to 4.57 to 5.29%, and the upper limit B can be set to 16.22 to 29.96%. The initial concentration of NaOH can be set to 4.57% or more and 16.22% or less.

In modification 3-3, the approximation equations of formulas 3 and 4 above are not used. Based on the values of the NaOH concentration A required to produce $NaHCO_3$ with saturated solubility shown in the lower part of Table 1 above and the values of the NaOH concentration B required to produce $Na_2CO_3$ with saturated solubility shown in the lower part of Table 2 above, the extraction temperature is set to 30°C or more and less than 40°C, the initial concentration of NaOH is set within the third concentration range shown in FIG. 6, the lower limit A can be set to 5.29 to 5.38%, and the upper limit B can be set to 29.96 to 36.98%. The initial concentration of NaOH can be set to 5.29% or more and 29.96% or less.

In any of modifications 3-1, 3-2, and 3-3 above, only $NaHCO_3$ precipitates at the extraction temperature and solid $NaHCO_3$ can be collected. Therefore, the same actions and effects as those of the third embodiment are attained.

(Fourth Embodiment)

In the fourth embodiment, the configurations of the devices are similar to those in the first embodiment shown in FIG. 1.

4-1. Target Product

In the fourth embodiment, the target product is an aqueous $Na_2CO_3$ solution or solid $Na_2CO_3$.

4-2. Initial NaOH Concentration, Maximum Temperature of Reaction Liquid, and Extraction Temperature

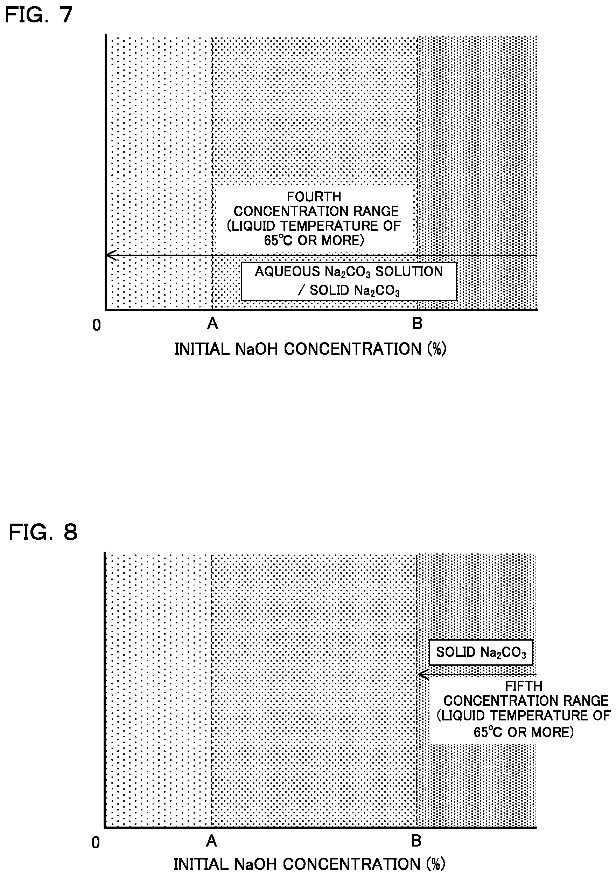

In the fourth embodiment, the initial concentration of NaOH is a value more than 0% and is within a fourth concentration range shown in FIG. 7.

In the fourth embodiment, the maximum temperature of the reaction liquid after the production of $NaHCO_3$ in the reaction liquid is set to 65°C or more. Since the above $CO_2$ immobilization reaction is an exothermic reaction, the temperature of the reaction liquid increases during $CO_2$ immobilization. When the temperature (liquid temperature) of the reaction liquid is less than 65°C, heating is performed to a temperature of 65°C or more by the above air pump 40 and the above liquid temperature adjustment device 50. The extraction temperature that is the liquid temperature when the target product is extracted from the reaction tank 11 is set to 0°C or more and 40°C or less as in the first embodiment. The other configurations are similar to those in the first embodiment.

4-3. Start and Stop of Reaction

In the $CO_2$ collection system 1 of the fourth embodiment, the suction operation of the air pump 40 is turned ON to start bubbling $CO_2$-containing gas in the reaction tank 11, thereby bringing the $CO_2$-containing gas into contact with the reaction liquid having the initial NaOH concentration. In this way, the $CO_2$ immobilization reaction is started. When the pH sensor 13 then detects the pH of the reaction liquid in the reaction tank 11 indicating that the total amount of NaOH has been consumed, the suction operation of the air pump 40 is turned OFF to stop bubbling the $CO_2$-containing gas, thereby stopping the $CO_2$ immobilization reaction.

4-4. Actions and Effects

In the $CO_2$ collection system 1 of the fourth embodiment, the maximum temperature of the reaction liquid after the production of $NaHCO_3$ in the reaction liquid is set to 65°C or more. Therefore, $NaHCO_3$ produced in the reaction tank 11 is thermally decomposed. Therefore, when the initial NaOH concentration is within the above fourth concentration range, that is, the entire range, an aqueous $Na_2CO_3$ solution or solid $Na_2CO_3$ is present as a product but $NaHCO_3$ is not present in the reaction tank 11. As a result, highly pure $Na_2CO_3$ can be obtained as the target product, and the target product can selectively be produced easily. Since $NaHCO_3$ is not present, clogging of the fine bubble forming device that is not shown and is provided at the tip of the pipe 41 due to the precipitation of $NaHCO_3$ can be prevented.

(Fifth Embodiment)

In the fifth embodiment, the configurations of the devices are similar to those in the first embodiment shown in FIG. 1.

5-1. Target Product

In the fifth embodiment, the target product is solid $Na_2CO_3$.

5-2. Initial NaOH Concentration, Maximum Temperature of Reaction Liquid, and Extraction Temperature

In the fifth embodiment, the initial concentration of NaOH is set to be equal to or more than the NaOH concentration required to produce $Na_2CO_3$ with saturated solubility at the extraction temperature that is derived based on the correspondence between the temperature of the reaction liquid and the NaOH concentration required to produce $Na_2CO_3$ with saturated solubility.

In the fifth embodiment, the "NaOH concentration required to produce $Na_2CO_3$ with saturated solubility at the extraction temperature that is derived based on the correspondence between the temperature of the reaction liquid and the NaOH concentration required to produce $Na_2CO_3$ with saturated solubility" is the NaOH concentration calculated based on the approximation equation of formula 4 above in the second embodiment.

In the fifth embodiment, the initial NaOH concentration is set within a fifth concentration range shown in FIG. 8 that is a range equal to or more than the NaOH concentration required to produce $Na_2CO_3$ with saturated solubility at the extraction temperature that is calculated based on the approximation equation of formula 4 above.

In the fifth embodiment, the maximum temperature of the reaction liquid after the production of $NaHCO_3$ in the reaction liquid is set to 65°C or more as in the fourth embodiment. The extraction temperature that is the liquid temperature when the target product is extracted from the reaction tank 11 is also set to 0°C or more and 40°C or less as in the fourth embodiment. The other configurations are similar to those in the first embodiment.

The lower limit B of the fifth concentration range shown in FIG. 8 can be set to 9.43 to 16.22% when the extraction temperature is 10°C or more and less than 20°C based on the values in the lower part of Table 2 above, and can preferably be set to 9.43%. The lower limit B of the fifth concentration range can be set to 16.22 to 29.96% when the extraction temperature is 20°C or more and less than 30°C based on the values in the lower part of Table 2 above, and can preferably be set to 16.22%. The lower limit B of the fifth concentration range can be set to 29.96 to 36.98% when the extraction temperature is 30°C or more and less than 40°C based on the values in the lower part of Table 2 above, and can preferably be set to 29.96%.

5-3. Start and Stop of Reaction

In the $CO_2$ collection system 1 of the fifth embodiment, the suction operation of the air pump 40 is turned ON to start bubbling $CO_2$-containing gas in the reaction tank 11, thereby bringing the $CO_2$-containing gas into contact with the reaction liquid having the initial NaOH concentration. In this way, the $CO_2$ immobilization reaction is started. When the pH sensor 13 then detects the pH of the reaction liquid in the reaction tank 11 indicating that the total amount of NaOH has been consumed, the suction operation of the air pump 40 is turned OFF to stop bubbling the $CO_2$-containing gas, thereby stopping the $CO_2$ immobilization reaction.

5-4. Actions and Effects

In the $CO_2$ collection system 1 of the fifth embodiment, the maximum temperature of the reaction liquid after the production of $NaHCO_3$ in the reaction liquid is set to 65°C or more. Therefore, $NaHCO_3$ produced in the reaction tank 11 is thermally decomposed. Since the initial NaOH concentration is set to the above fifth concentration range, $Na_2CO_3$ is supersaturated and precipitates in the reaction tank 11. As a result, the only product that precipitates and becomes a solid in the reaction tank 11 is $Na_2CO_3$. Therefore, highly pure solid $Na_2CO_3$ can be obtained as the target product by filtration or centrifugation of the collected matter in the collection container 75, and the target product can selectively be produced easily.

In the fifth embodiment, the initial NaOH concentration is determined based on the approximation equation of formula 4 above. Instead of this, modification 5-1, 5-2, or 5-3 below can be adopted.

In modification 5-1, the approximation equation of formula 4 above is not used. Based on the values of the NaOH concentration required to produce $Na_2CO_3$ with saturated solubility shown in the lower part of Table 2 above, the extraction temperature is set to 10°C or more and less than 20°C, the initial concentration of NaOH is set within the fifth concentration range shown in FIG. 8, and the lower limit B can be set to 9.43 to 16.22%. The initial concentration of NaOH is preferably 9.43% or more.

In modification 5-2, the approximation equation of formula 4 above is not used. Based on the values of the NaOH concentration required to produce $Na_2CO_3$ with saturated solubility shown in the lower part of Table 2 above, the extraction temperature is set to 20°C or more and less than 30°C, the initial concentration of NaOH is set within the fifth concentration range shown in FIG. 8, and the lower limit B can be set to 16.22 to 29.96%. The initial concentration of NaOH is preferably 16.22% or more.

In modification 5-3, based on the values of the NaOH concentration required to produce $Na_2CO_3$ with saturated solubility shown in the lower part of Table 2 above, the extraction temperature is set to 30°C or more and less than 40°C, the initial concentration of NaOH is set within the fifth concentration range shown in FIG. 8, and the lower limit B can be set to 29.96 to 36.98%. The initial concentration of NaOH is preferably 29.96% or more.

In any of modifications 5-1, 5-2, and 5-3 above, the only product obtained as a solid at the extraction temperature is $Na_2CO_3$. Therefore, highly pure solid $Na_2CO_3$ can be obtained as the target product, and the same actions and effects as those of the fifth embodiment are attained.

(Sixth Embodiment)

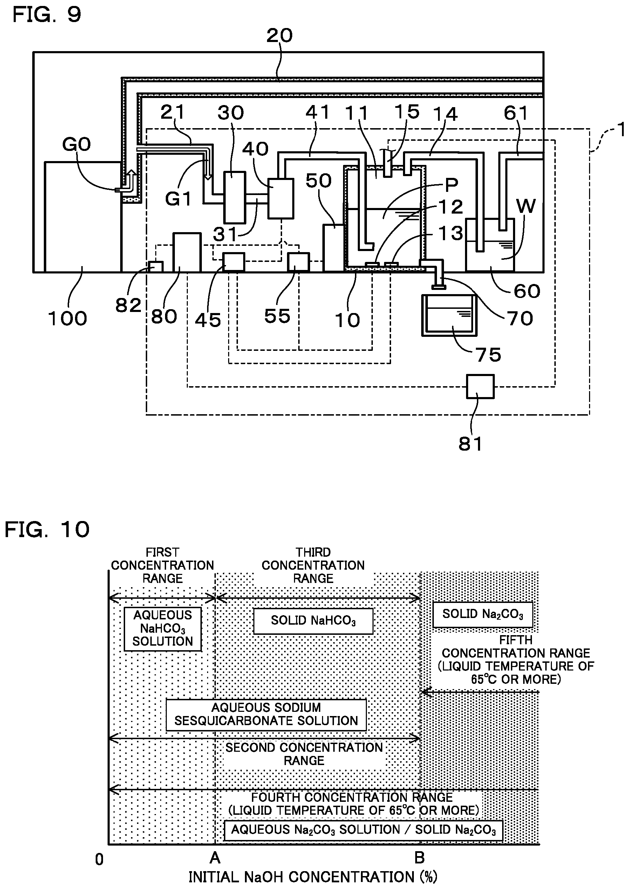

As shown in FIG. 9, the $CO_2$ collection system 1 of the sixth embodiment includes an adjustment unit 80 and an initial NaOH concentration setting unit 81. The other configurations in the sixth embodiment are the same as those in the first embodiment shown in FIG. 1, and therefore the same reference numerals as in the first embodiment are used and the description thereof is omitted.

6-1. Adjustment Unit 80 and Initial NaOH Concentration Setting Unit 81

The adjustment unit 80 shown in FIG. 9 adjusts the maximum temperature of the reaction liquid after the production of $NaHCO_3$ in the reaction liquid, the extraction temperature, and the initial concentration of NaOH in the reaction liquid to adjust the target product. In the sixth embodiment, the adjustment unit 80 adjusts the temperature (liquid temperature) of the reaction liquid by adjusting the flow rate of the air pump 40 through the pump control 45 and by controlling the drive of the liquid temperature adjustment device 50 through the liquid temperature adjustment device control unit 55. Further, the initial NaOH concentration of the reaction liquid to be introduced into the reaction tank 11 is adjusted via the initial NaOH concentration setting unit 81 described later.

The initial NaOH concentration setting unit 81 shown in FIG. 9 is configured to introduce the reaction liquid having the initial NaOH concentration adjusted by the adjustment unit 80 into the reaction tank 11 from a reaction liquid introduction unit 15 provided in the reaction tank 11.

In the sixth embodiment, the adjustment unit 80 includes a selection unit 82 for a user to select a desired target product, and the product selected by the user via the selection unit 82 is set as the target product. Then, the initial NaOH concentration of the reaction liquid and the temperature (liquid temperature) of the reaction liquid are adjusted according to the set target product. The correspondence between the initial NaOH concentration and the target product can be shown as in FIG. 10.

6-2. Adjustment of Target Product

The adjustment of the target product in the sixth embodiment will be described in detail below.

In the sixth embodiment, when the user selects an aqueous $NaHCO_3$ solution as the target product via the selection unit 82, the initial NaOH concentration is adjusted within the first concentration range via the initial NaOH concentration setting unit 81 as in the first embodiment, and the maximum temperature of the reaction liquid and the extraction temperature are also adjusted via the air pump 40 and the liquid temperature adjustment device 50 as in the first embodiment. Thus, the aqueous $NaHCO_3$ solution can be obtained as the target product as in the first embodiment.

By adjusting the initial NaOH concentration, the maximum temperature of the reaction liquid, and the extraction temperature as in modifications 1-1, 1-2, and 1-3 above, the aqueous $NaHCO_3$ solution may be obtained as the target product as in modifications 1-1, 1-2, and 1-3.

In the sixth embodiment, when the user selects an aqueous sodium sesquicarbonate solution as the target product via the selection unit 82, the initial NaOH concentration, the maximum temperature of the reaction liquid, and the extraction temperature are adjusted via the initial NaOH concentration setting unit 81, the air pump 40, and the liquid temperature adjustment device 50 as in the second embodiment. Thus, the aqueous sodium sesquicarbonate solution can be obtained as the target product as in the second embodiment.

In the sixth embodiment, when the user selects solid $NaHCO_3$ as the target product via the selection unit 82, the initial NaOH concentration, the maximum temperature of the reaction liquid, and the extraction temperature are adjusted via the initial NaOH concentration setting unit 81, the air pump 40, and the liquid temperature adjustment device 50 as in the third embodiment. Thus, solid $NaHCO_3$ can be obtained as the target product as in the third embodiment.

In the sixth embodiment, when the user selects either an aqueous $Na_2CO_3$ solution or solid $Na_2CO_3$ as the target product via the selection unit 82, the initial NaOH concentration, the maximum temperature of the reaction liquid, and the extraction temperature are adjusted via the initial NaOH concentration setting unit 81, the air pump 40, and the liquid temperature adjustment device 50 as in the fourth embodiment. Thus, the aqueous $Na_2CO_3$ solution or solid $Na_2CO_3$ can

be obtained as the target product as in the fourth embodiment.

In the sixth embodiment, when the user selects solid $Na_2CO_3$ as the target product via the selection unit 82, the initial NaOH concentration, the maximum temperature of the reaction liquid, and the extraction temperature are adjusted via the initial NaOH concentration setting unit 81, the air pump 40, and the liquid temperature adjustment device 50 as in the fifth embodiment. Thus, solid $Na_2CO_3$ can be obtained as the target product as in the third embodiment.

6-3. Actions and Effects

In the $CO_2$ collection system of the sixth embodiment, the target product to be extracted from the reaction liquid is adjusted by adjusting the maximum temperature of the reaction liquid after the production of $NaHCO_3$ in the reaction liquid, the extraction temperature that is the temperature of the reaction liquid when the target product is extracted from the reaction tank, and the initial concentration of NaOH in the reaction liquid. Thus, the product can selectively be produced easily, and the desired target product can be extracted with high purity.

The present invention is not limited to the above embodiments and modifications, and can be applied to various embodiments without departing from the spirit and scope of the present invention.

**Claims**

1. A $CO_2$ collection system (1) configured to collect $CO_2$ by bringing $CO_2$-containing gas into contact with a reaction liquid containing NaOH and stored in a reaction tank (11) to produce a target product, wherein the target product to be extracted from the reaction liquid is adjusted by adjusting a maximum temperature of the reaction liquid after production of $NaHCO_3$ in the reaction liquid, an extraction temperature that is a temperature of the reaction liquid when the target product is extracted from the reaction tank, and an initial concentration of the NaOH in the reaction liquid.

2. A $CO_2$ collection system (1) configured to collect $CO_2$ by bringing $CO_2$-containing gas into contact with a reaction liquid containing NaOH and stored in a reaction tank (11) to produce a predetermined target product, wherein

   a maximum temperature of the reaction liquid after production of $NaHCO_3$ in the reaction liquid is determined according to the target product to be extracted from the reaction liquid, and
   an initial concentration of the NaOH in the reaction liquid is determined based on the target product to be extracted from the reaction liquid and an extraction temperature that is a temperature of the reaction liquid when the target product is extracted from the reaction tank.

3. The $CO_2$ collection system according to claim 1 or 2, wherein

   the target product is an aqueous $NaHCO_3$ solution,
   the maximum temperature of the reaction liquid after the production of the $NaHCO_3$ in the reaction liquid is less than 65°C,
   the extraction temperature is 0°C or more and 40°C or less, and
   the initial concentration of the NaOH is more than 0% and equal to or less than a NaOH concentration required to produce the $NaHCO_3$ with saturated solubility at the extraction temperature that is derived based on correspondence between a temperature of the reaction liquid and the NaOH concentration required to produce the $NaHCO_3$ with saturated solubility.

4. The $CO_2$ collection system according to claim 3, wherein

   the extraction temperature is 10°C or more and less than 20°C, and
   the initial concentration of the NaOH is more than 0% and an upper limit is 3.86 to 4.57%.

5. The $CO_2$ collection system according to claim 3, wherein

   the extraction temperature is 20°C or more and less than 30°C, and
   the initial concentration of the NaOH is more than 0% and an upper limit is 4.57 to 5.29%.

6. The $CO_2$ collection system according to claim 3, wherein

the extraction temperature is 30°C or more and less than 40°C, and
the initial concentration of the NaOH is more than 0% and an upper limit is 5.29 to 5.38%.

7. The $CO_2$ collection system according to claim 1 or 2, wherein

the target product is an aqueous sodium sesquicarbonate solution,
the maximum temperature of the reaction liquid after the production of the $NaHCO_3$ in the reaction liquid is less than 65°C,
the extraction temperature is 0°C or more and 40°C or less, and
the initial concentration of the NaOH is more than 0% and equal to or less than a NaOH concentration required to produce $Na_2CO_3$ with saturated solubility at the extraction temperature that is derived based on correspondence between a temperature of the reaction liquid and the NaOH concentration required to produce the $Na_2CO_3$ with saturated solubility.

8. The $CO_2$ collection system according to claim 7, wherein

the extraction temperature is 10°C or more and less than 20°C, and
the initial concentration of the NaOH is more than 0% and an upper limit is 9.43 to 16.22%.

9. The $CO_2$ collection system according to claim 7, wherein

the extraction temperature is 20°C or more and less than 30°C, and
the initial concentration of the NaOH is more than 0% and an upper limit is 16.22 to 29.96%.

10. The $CO_2$ collection system according to claim 7, wherein

the extraction temperature is 30°C or more and less than 40°C, and
the initial concentration of the NaOH is more than 0% and an upper limit is 29.96 to 36.98%.

11. The $CO_2$ collection system according to claim 1 or 2, wherein

the target product is solid $NaHCO_3$,
the maximum temperature of the reaction liquid after the production of the $NaHCO_3$ in the reaction liquid is less than 65°C,
the extraction temperature is 0°C or more and 40°C or less, and
the initial concentration of the NaOH is equal to or more than a NaOH concentration required to produce the $NaHCO_3$ with saturated solubility at the extraction temperature that is derived based on correspondence between a temperature of the reaction liquid and the NaOH concentration required to produce the $NaHCO_3$ with saturated solubility, and equal to or less than a NaOH concentration required to produce $Na_2CO_3$ with saturated solubility at the extraction temperature that is derived based on correspondence between the temperature of the reaction liquid and the NaOH concentration required to produce the $Na_2CO_3$ with saturated solubility.

12. The $CO_2$ collection system according to claim 11, wherein

the extraction temperature is 10°C or more and less than 20°C, and
a lower limit of the initial concentration of the NaOH is 3.86 to 4.57% and an upper limit of the initial concentration of the NaOH is 9.43 to 16.22%.

13. The $CO_2$ collection system according to claim 11, wherein

the extraction temperature is 20°C or more and less than 30°C, and
a lower limit of the initial concentration of the NaOH is 4.57 to 5.29% and an upper limit of the initial concentration of the NaOH is 16.22 to 29.96%.

14. The $CO_2$ collection system according to claim 11, wherein

the extraction temperature is 30°C or more and less than 40°C, and
a lower limit of the initial concentration of the NaOH is 5.29 to 5.38% and an upper limit of the initial concentration of the NaOH is 29.96 to 36.98%.

**15.** The $CO_2$ collection system according to claim 1 or 2, wherein

the target product is at least either of an aqueous $Na_2CO_3$ solution and solid $Na_2CO_3$,
the maximum temperature of the reaction liquid after the production of the $NaHCO_3$ in the reaction liquid is 65°C or more,
the extraction temperature is 0°C or more, and
the initial concentration of the NaOH in the reaction liquid is more than 0%.

**16.** The $CO_2$ collection system according to claim 1 or 2, wherein

the target product is solid $Na_2CO_3$,
the maximum temperature of the reaction liquid after the production of the $NaHCO_3$ in the reaction liquid is 65°C or more,
the extraction temperature is 0°C or more, and
the initial concentration of the NaOH in the reaction liquid is equal to or more than a NaOH concentration required to produce $Na_2CO_3$ with saturated solubility at the extraction temperature that is derived based on correspondence between a temperature of the reaction liquid and the NaOH concentration required to produce the $Na_2CO_3$ with saturated solubility.

**17.** The $CO_2$ collection system according to claim 16, wherein

the extraction temperature is 10°C or more and less than 20°C, and
a lower limit of the initial concentration of the NaOH in the reaction liquid is 9.43 to 16.22%.

**18.** The $CO_2$ collection system according to claim 16, wherein

the extraction temperature is 20°C or more and less than 30°C, and
a lower limit of the initial concentration of the NaOH in the reaction liquid is 16.22 to 29.96%.

**19.** The $CO_2$ collection system according to claim 16, wherein

the extraction temperature is 30°C or more and less than 40°C, and
a lower limit of the initial concentration of the NaOH in the reaction liquid is 29.96 to 36.98%.

**20.** A $CO_2$ collection system configured to collect $CO_2$ by bringing $CO_2$-containing gas into contact with a reaction liquid containing NaOH and stored in a reaction tank to produce a target product, wherein

the target product is an aqueous $NaHCO_3$ solution,
a maximum temperature of the reaction liquid after production of $NaHCO_3$ in the reaction liquid is less than 65°C,
an extraction temperature that is a temperature of the reaction liquid when the target product is extracted from the reaction tank is 10°C or more and less than 20°C, and
an initial concentration of the NaOH is more than 0% and an upper limit is within a range of 3.86 to 4.57%.

**21.** A $CO_2$ collection system configured to collect $CO_2$ by bringing $CO_2$-containing gas into contact with a reaction liquid containing NaOH and stored in a reaction tank to produce a target product, wherein

the target product is an aqueous $NaHCO_3$ solution,
a maximum temperature of the reaction liquid after production of $NaHCO_3$ in the reaction liquid is less than 65°C,
an extraction temperature that is a temperature of the reaction liquid when the target product is extracted from the reaction tank is 20°C or more and less than 30°C, and
an initial concentration of the NaOH is more than 0% and an upper limit is 4.57 to 5.29%.

**22.** A $CO_2$ collection system configured to collect $CO_2$ by bringing $CO_2$-containing gas into contact with a reaction liquid containing NaOH and stored in a reaction tank to produce a target product, wherein

the target product is an aqueous $NaHCO_3$ solution,

a maximum temperature of the reaction liquid after production of $NaHCO_3$ in the reaction liquid is less than 65°C, an extraction temperature that is a temperature of the reaction liquid when the target product is extracted from the reaction tank is 30°C or more and less than 40°C, and
an initial concentration of the NaOH is more than 0% and an upper limit is 5.29 to 5.38%.

23. A $CO_2$ collection system configured to collect $CO_2$ by bringing $CO_2$-containing gas into contact with a reaction liquid containing NaOH and stored in a reaction tank to produce a target product, wherein

the target product is an aqueous sodium sesquicarbonate solution,
a maximum temperature of the reaction liquid after production of $NaHCO_3$ in the reaction liquid is less than 65°C, an extraction temperature that is a temperature of the reaction liquid when the target product is extracted from the reaction tank is 10°C or more and less than 20°C, and
an initial concentration of the NaOH is more than 0% and an upper limit is 9.43 to 16.22%.

24. A $CO_2$ collection system configured to collect $CO_2$ by bringing $CO_2$-containing gas into contact with a reaction liquid containing NaOH and stored in a reaction tank to produce a target product, wherein

the target product is an aqueous sodium sesquicarbonate solution,
a maximum temperature of the reaction liquid after production of $NaHCO_3$ in the reaction liquid is less than 65°C, an extraction temperature that is a temperature of the reaction liquid when the target product is extracted from the reaction tank is 20°C or more and less than 30°C, and
an initial concentration of the NaOH is more than 0% and an upper limit is 16.22 to 29.96%.

25. A $CO_2$ collection system configured to collect $CO_2$ by bringing $CO_2$-containing gas into contact with a reaction liquid containing NaOH and stored in a reaction tank to produce a target product, wherein

the target product is an aqueous sodium sesquicarbonate solution,
a maximum temperature of the reaction liquid after production of $NaHCO_3$ in the reaction liquid is less than 65°C, an extraction temperature that is a temperature of the reaction liquid when the target product is extracted from the reaction tank is 30°C or more and less than 40°C, and
an initial concentration of the NaOH is more than 0% and an upper limit is 29.96 to 36.98%.

26. A $CO_2$ collection system configured to collect $CO_2$ by bringing $CO_2$-containing gas into contact with a reaction liquid containing NaOH and stored in a reaction tank to produce a target product, wherein

the target product is solid $NaHCO_3$,
a maximum temperature of the reaction liquid after production of $NaHCO_3$ in the reaction liquid is less than 65°C, an extraction temperature that is a temperature of the reaction liquid when the target product is extracted from the reaction tank is 10°C or more and less than 20°C, and
a lower limit of an initial concentration of the NaOH is 3.86 to 4.57% and an upper limit of the initial concentration of the NaOH is 9.43 to 16.22%.

27. A $CO_2$ collection system configured to collect $CO_2$ by bringing $CO_2$-containing gas into contact with a reaction liquid containing NaOH and stored in a reaction tank to produce a target product, wherein

the target product is solid $NaHCO_3$,
a maximum temperature of the reaction liquid after production of $NaHCO_3$ in the reaction liquid is less than 65°C, an extraction temperature that is a temperature of the reaction liquid when the target product is extracted from the reaction tank is 20°C or more and less than 30°C, and
a lower limit of an initial concentration of the NaOH is 4.57 to 5.29% and an upper limit of the initial concentration of the NaOH is 16.22 to 29.96%.

28. A $CO_2$ collection system configured to collect $CO_2$ by bringing $CO_2$-containing gas into contact with a reaction liquid containing NaOH and stored in a reaction tank to produce a target product, wherein

the target product is solid $NaHCO_3$,
a maximum temperature of the reaction liquid after production of $NaHCO_3$ in the reaction liquid is less than 65°C, an extraction temperature that is a temperature of the reaction liquid when the target product is extracted from the reaction tank is 30°C or more and less than 40°C, and
a lower limit of an initial concentration of the NaOH is 5.29 to 5.38% and an upper limit of the initial concentration of the NaOH is 29.96 to 36.98%.

29. A $CO_2$ collection system configured to collect $CO_2$ by bringing $CO_2$-containing gas into contact with a reaction liquid containing NaOH and stored in a reaction tank to produce a target product, wherein

the target product is at least either of an aqueous $Na_2CO_3$ solution and solid $Na_2CO_3$, a maximum temperature of the reaction liquid after production of $NaHCO_3$ in the reaction liquid is 65°C or more,
an extraction temperature that is a temperature of the reaction liquid when the target product is extracted from the reaction tank is 0°C or more, and
an initial concentration of the NaOH in the reaction liquid is more than 0%.

30. A $CO_2$ collection system configured to collect $CO_2$ by bringing $CO_2$-containing gas into contact with a reaction liquid containing NaOH and stored in a reaction tank to produce a target product, wherein

the target product is at least either of an aqueous $Na_2CO_3$ solution and solid $Na_2CO_3$, a maximum temperature of the reaction liquid after production of $NaHCO_3$ in the reaction liquid is 65°C or more,
an extraction temperature that is a temperature of the reaction liquid when the target product is extracted from the reaction tank is 10°C or more and less than 20°C, and
a lower limit of an initial concentration of the NaOH in the reaction liquid is 9.43 to 16.22%.

31. A $CO_2$ collection system configured to collect $CO_2$ by bringing $CO_2$-containing gas into contact with a reaction liquid containing NaOH and stored in a reaction tank to produce a target product, wherein

the target product is at least either of an aqueous $Na_2CO_3$ solution and solid $Na_2CO_3$, a maximum temperature of the reaction liquid after production of $NaHCO_3$ in the reaction liquid is 65°C or more,
an extraction temperature that is a temperature of the reaction liquid when the target product is extracted from the reaction tank is 20°C or more and less than 30°C, and
a lower limit of an initial concentration of the NaOH in the reaction liquid is 16.22 to 29.96%.

32. A $CO_2$ collection system configured to collect $CO_2$ by bringing $CO_2$-containing gas into contact with a reaction liquid containing NaOH and stored in a reaction tank to produce a target product, wherein

the target product is at least either of an aqueous $Na_2CO_3$ solution and solid $Na_2CO_3$, a maximum temperature of the reaction liquid after production of $NaHCO_3$ in the reaction liquid is 65°C or more,
an extraction temperature that is a temperature of the reaction liquid when the target product is extracted from the reaction tank is 30°C or more and less than 40°C, and
a lower limit of an initial concentration of the NaOH in the reaction liquid is 29.96 to 36.98%.

FIG. 1

FIG. 2

FIG. 3

FIRST
CONCENTRATION
RANGE

AQUEOUS
NaHCO₃
SOLUTION

0                    A                    B

INITIAL NaOH CONCENTRATION (%)

FIG. 4

$y=1.112x+3.70$
$(R^2=0.966)$

NaOH CONCENTRATION REQUIRED
TO PRODUCE Na₂CO₃
WITH SATURATED SOLUBILITY [%]

TEMPERATURE (LIQUID TEMPERATURE) [℃]

FIG. 5

FIG. 6

FIG. 7

FIG. 8

FIG. 9

FIG. 10

INITIAL NaOH CONCENTRATION (%)

# INTERNATIONAL SEARCH REPORT

| International application No. |
|---|
| **PCT/JP2022/032631** |

**A. CLASSIFICATION OF SUBJECT MATTER**

*C01D 7/07*(2006.01)i; *C01D 7/14*(2006.01)i; *B01D 53/14*(2006.01)i; *B01D 53/62*(2006.01)i
FI: B01D53/62; B01D53/14 210; C01D7/07; C01D7/14

According to International Patent Classification (IPC) or to both national classification and IPC

**B. FIELDS SEARCHED**

Minimum documentation searched (classification system followed by classification symbols)

C01D7/07; C01D7/14; B01D53/14-18, 40, 62, 77-79; F23J15/00; F27D17/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 3-275509 A (ASAHI GLASS CO., LTD.) 06 December 1991 (1991-12-06)<br>claims, p. 2, upper left column, line 7 from the bottom to p. 3, upper right column, line 5, examples | 1-3, 6, 11-14, 22, 26-28 |
| X | JP 2012-206872 A (LION CORP.) 25 October 2012 (2012-10-25)<br>claims, paragraphs [0014]-[0019], examples | 1-2, 11-14, 26-28 |
| X | JP 57-17424 A (TOYO SODA KOGYO K.K.) 29 January 1982 (1982-01-29)<br>examples | 1-2, 11-14, 26-28 |
| X | JP 6-263433 A (TODA KOGYO CORP.) 20 September 1994 (1994-09-20)<br>claims, paragraphs [0025], [0026], [0034], examples | 1-2, 15, 29-32 |
| X | JP 57-92517 A (TOYO SODA KOGYO K.K.) 09 June 1982 (1982-06-09)<br>claims, p. 2, upper right column, line 7 to p. 3, upper right column, line 8, examples | 1-2, 15-19, 29-32 |
| A | JP 48-16799 B1 (AKIMOTO, Shinkichi) 24 May 1973 (1973-05-24) | 1-32 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 October 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/032631**

| Patent document cited in search report | | | Publication date (day/month/year) | Patent family member(s) | Publication date (day/month/year) |
|---|---|---|---|---|---|
| JP | 3-275509 | A | 06 December 1991 | (Family: none) | |
| JP | 2012-206872 | A | 25 October 2012 | (Family: none) | |
| JP | 57-17424 | A | 29 January 1982 | GB    2081602    A<br>examples<br>BE    889518    A | |
| JP | 6-263433 | A | 20 September 1994 | (Family: none) | |
| JP | 57-92517 | A | 09 June 1982 | (Family: none) | |
| JP | 48-16799 | B1 | 24 May 1973 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11243985 A
- JP 2009535198 PCT

- JP 2009535198 A